# FASCICULE DE BREVET EUROPEEN

(11) **EP 4 473 814 B1**
(45) Date de publication et mention de la délivrance du brevet: **24.12.2025**
(21) Numéro de dépôt: 24180461.6
(22) Date de dépôt: 06.06.2024
(51) Int. Cl.: A01B 61/04

(54) **ENSEMBLE D'OUTIL POUR MACHINE AGRICOLE ET MACHINE COMPORTANT AU MOINS UN TEL ENSEMBLE D'OUTIL**
WERKZEUGANORDNUNG FUR LANDWIRTSCHAFTLICHE MASCHINE UND MASCHINE MIT MINDESTENS EINER SOLCHEN WERKZEUGANORDNUNG
TOOL ASSEMBLY FOR AN AGRICULTURAL MACHINE AND MACHINE COMPRISING AT LEAST ONE SUCH TOOL ASSEMBLY

(30) Priorité: 07.06.2023 FR 2305734
(43) Date de publication de la demande: 11.12.2024
(73) Titulaire: Kuhn-Huard S.A.S, 44110 Chateaubriant (FR)
(72) Inventeur: BOSSUET, Djimy, 53800 LA SELLE CRAONNAISE (FR); VOITON, David, 44522 MESANGER (FR); GUERMONT, Jean-François, 44110 ERBRAY (FR)
(74) Mandataire: Hager, Esther Evelyne

(56) Documents cités:
- EP-B1- 0 123 067
- CN-B- 109 475 078
- DE-A1- 102014 117 668
- DE-U1- 20 008 386
- GB-A- 834 417
- US-A1- 2015 053 434

## Description

La présente invention concerne le domaine du machinisme agricole, plus particulièrement des machines équipées d'outils pour le travail du sol ou le semis pouvant se déplacer sous contrainte entre une position courante de travail et une position de sécurité, et a pour objet un ensemble ou dispositif d'outil pour une telle machine et une machine comportant au moins un tel ensemble ou dispositif d'outil.

Les ensembles d'outils pour le travail du sol ou le semis visés dans la présente comprennent généralement des outils tels que des dents, des disques, des rouleaux ou analogues, fixés généralement sur le châssis de la machine concernée, par séries ou alignements, au niveau de traverses, par le biais de liaisons articulées. A ces outils sont associés des dispositifs de sécurité mécanique autorisant un escamotage de l'outil en cas de rencontre d'un obstacle à son avancement.

Les documents US 2015/053434 A1, GB 834 417 A, CN 109 47, EP 0 123 067 B1 et DE 200 08 386 U1 représentent des ensembles d'outil pour machine agricole connus. Par le document EP 3 097 753, on connait déjà un ensemble d'outil pour machine agricole de travail du sol ou de semis comportant un châssis et se déplaçant au travail selon une direction d'avance. Cet ensemble d'outil comprend un outil relié au châssis par l'intermédiaire d'une liaison principale à pivot et par un dispositif de sécurité mécanique. L'outil présente un élément allongé qui est élastiquement compressible selon son axe longitudinal. Il est monté avec guidage sur ou autour d'une tige et est positionné entre une liaison articulée avant de cette tige avec le châssis et une liaison articulée arrière de cette tige avec l'outil. Cet outil peut être déplacé par pivotement autour de la liaison principale à pivot entre une position déployée maximale de travail dans laquelle l'élément élastiquement compressible est au plus faiblement comprimé et une position d'escamotage extrême dans laquelle l'élément élastiquement compressible est fortement comprimé. L'élément élastiquement compressible est maintenu constamment en appui sous pression entre un siège avant associé à la liaison articulée avant de la tige et un siège arrière associé à sa liaison articulée arrière.

En cours de travail, lorsque la charge axiale exercée par l'outil (ici une dent) sur l'élément élastiquement compressible (ici un ressort boudin) est supérieure à sa force de maintien, l'outil pivote autour de l'articulation principale pour s'escamoter grâce au dispositif de sécurité. Sous l'effet de cette charge axiale (de sens opposé à la direction d'avance), l'élément élastiquement compressible va se comprimer. Parfois, au lieu de continuer de diminuer en longueur de manière rectiligne, cet élément va fléchir latéralement d'un côté ou de l'autre de son axe longitudinal. Ce phénomène est appelé le flambage. Le flambage induit des efforts non parallèles à l'axe de la tige et génère des frottements et une usure du dispositif de sécurité. Une usure peut être constatée au niveau des différentes surfaces d'appui du ressort, de la tige et des articulations, en plus de sollicitations imprévisibles dans l'ensemble d'outil.

La présente invention a pour but principal de pallier ces inconvénients de l'état de la technique précité et de proposer un ensemble d'outil avec un dispositif de sécurité à durée de vie augmentée, par limitation des phénomènes d'usure, ce notamment en contrôlant les conditions du flambage de l'élément élastiquement compressible et en maîtrisant la localisation et la nature des frottements générés lors de la sollicitation du dispositif. En outre, l'amélioration apportée par l'invention devrait être simple en termes de modification structurelle et/ou constructive à apporter à l'ensemble d'outil existant.

A cet effet, l'invention a pour objet un ensemble d'outil pour machine agricole de travail du sol ou de semis comportant un châssis et se déplaçant au travail selon une direction d'avance, l'ensemble comprenant un outil relié au châssis par l'intermédiaire d'une liaison principale à pivot et par un dispositif de sécurité mécanique, ce dernier présentant un élément allongé qui est élastiquement compressible selon son axe longitudinal, monté avec guidage sur ou autour d'une tige et positionné entre une liaison articulée avant de cette tige (8) avec le châssis et une liaison articulée arrière de cette tige avec l'outil, cet outil pouvant être déplacé par pivotement autour de la liaison principale à pivot entre une position déployée maximale de travail dans laquelle l'élément élastiquement compressible est au plus faiblement comprimé et une position d'escamotage extrême dans laquelle l'élément élastiquement compressible est fortement comprimé, et l'élément élastiquement compressible étant maintenu constamment en appui sous pression entre un siège avant associé à la liaison articulée avant de la tige et un siège arrière associé à sa liaison articulée arrière, ensemble d'outil caractérisé en ce que l'axe longitudinal de l'élément élastiquement compressible est parallèle et décalé radialement par rapport à l'axe longitudinal de la tige.

L'invention sera mieux comprise grâce à la description ci-après, qui se rapporte à des modes de réalisation préférés, donnés à titre d'exemples non limitatifs, et expliqués avec référence aux dessins schématiques annexés, dans lesquels :
[Fig. 1] est une vue en perspective d'une machine agricole de travail du sol comportant des ensembles d'outils selon l'invention, les outils se présentant sous forme de dents ;
[Fig. 2A] et
[Fig. 2B] sont des vues en élévation latérale représentant un ensemble d'outil (ici un outil sous forme de dent) faisant partie de la machine de la figure 1, respectivement en position déployée de travail (vers le bas) et en position escamotée de sécurité (vers le haut) ;
[Fig. 3A] et
[Fig. 3B] sont des vues de détail partiellement en coupe représentant schématiquement les deux tendances aléatoires de flambage de l'élément élastiquement compressible (vers le bas ou vers le haut) du dispositif de sécurité mécanique d'un ensemble d'outil tel que représenté sur les figures 2, en l'absence de mise en œuvre de l'invention ;
[Fig. 4A] est une vue de détail partiellement en coupe, selon un plan similaire au plan de coupe des figures 3, d'un ensemble d'outil tel que représenté sur les figures 2, illustrant un premier mode de réalisation de l'invention et
[Fig. 4B] est une vue partielle en perspective de l'objet représenté sur la figure 4A ;
[Fig. 5A] et
[Fig. 5B] sont des vues en perspective de la tige et de la pièce formant le siège arrière faisant partie du dispositif de sécurité mécanique de l'ensemble d'outil représenté sur les figures 4 ;
[Fig. 6A] et
[Fig. 6B] sont des vues partielles, en élévation latérale et en coupe selon un plan parallèle à celui des vues des figures 3 et 4, d'un ensemble d'outil selon un autre mode de réalisation de l'invention, respectivement en position déployée de travail (vers le bas) et en position escamotée de sécurité (vers le haut) ;
[Fig. 6C] est une vue en perspective de l'objet représenté sur la figure 6B.

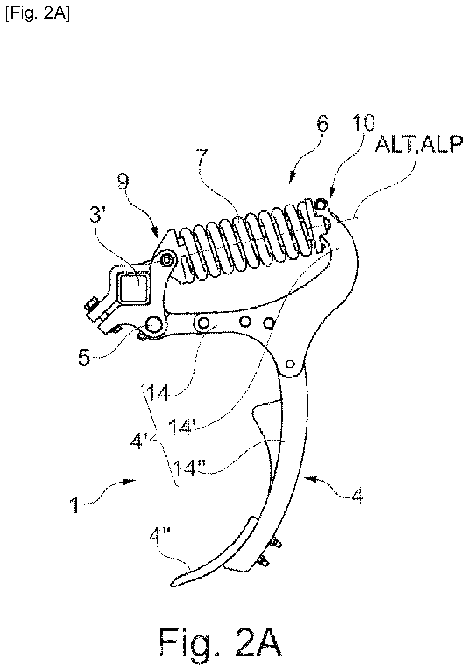

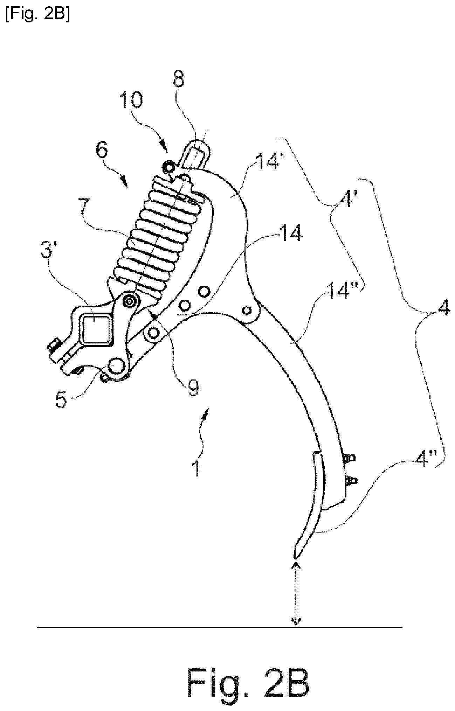

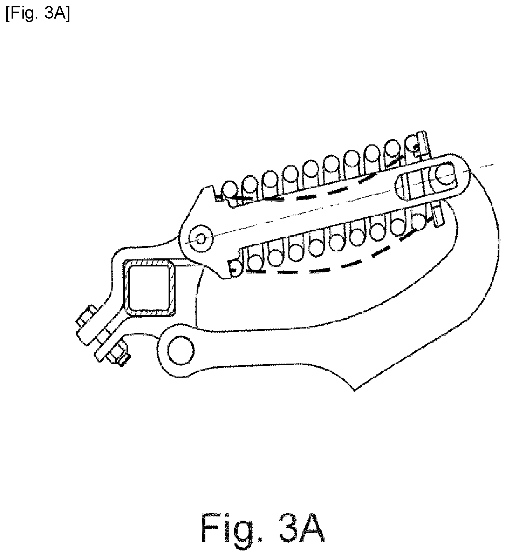

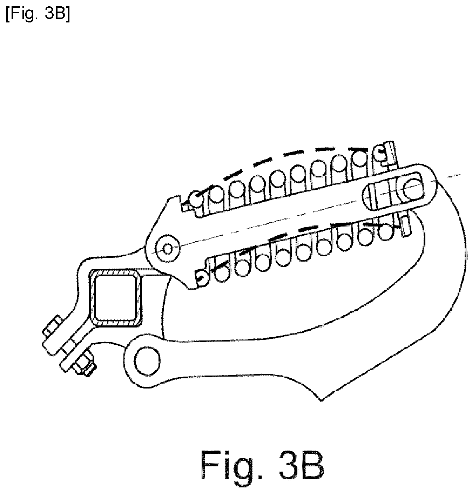

Les figures 2 et partiellement les figures 3, 4 et 6 illustrent un ensemble d'outil (1) pour machine agricole (2) de travail du sol ou de semis comportant un châssis (3) et se déplaçant au travail dans un champ selon une direction d'avance (A).

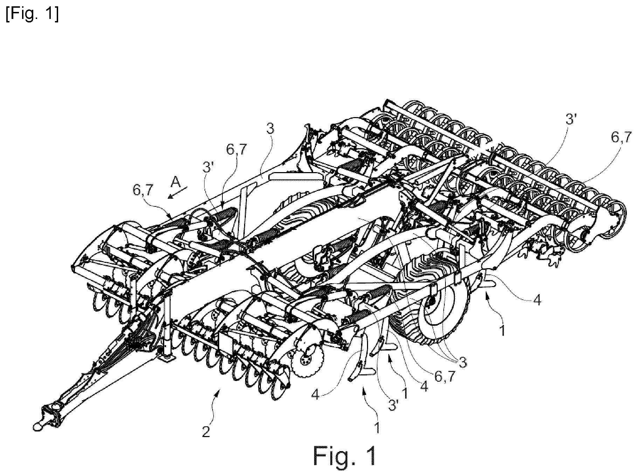

L'ensemble d'outil (1) comprend un outil (4) relié au châssis (3) par l'intermédiaire d'une liaison principale à pivot (5) et par un dispositif de sécurité mécanique (6). Le dispositif de sécurité mécanique (6) présente un élément allongé (7) qui est élastiquement compressible selon son axe longitudinal (ALR). Il est monté avec guidage sur ou autour d'une tige (8) et est positionné entre une liaison articulée avant (9) de cette tige (8) avec le châssis (3) et une liaison articulée arrière (10) de cette tige (8) avec l'outil (4). Comme le montrent les figures 2, l'outil (4) peut être déplacé par pivotement autour de la liaison principale à pivot (5) entre une position déployée maximale de travail dans laquelle l'élément élastiquement compressible (7) est au plus faiblement comprimé et une position d'escamotage extrême dans laquelle l'élément élastiquement compressible (7) est fortement comprimé. L'élément élastiquement compressible (7) est maintenu constamment en appui sous pression entre un siège avant (11) associé à la liaison articulée avant (9) de la tige (8) et un siège arrière (12) associé à sa liaison articulée arrière (10). La figure 1 illustre un exemple de réalisation d'une machine agricole de travail du sol. Il s'agit d'un cultivateur muni de disques et de dents adaptés aux travaux de préparation du sol, comme le déchaumage ou la préparation du lit de semence. La machine illustrée est équipée de deux rangées de disques pour découper les résidus, puis de quatre rangées de dents qui vont permettre de mélanger la terre avec les résidus. Les dents sont réparties sur quatre rangées pour faciliter le passage des résidus et éviter les bourrages. La machine est encore équipée d'une rangée de disques de nivellement à l'arrière des dents et d'un rouleau pour rappuyer la terre.

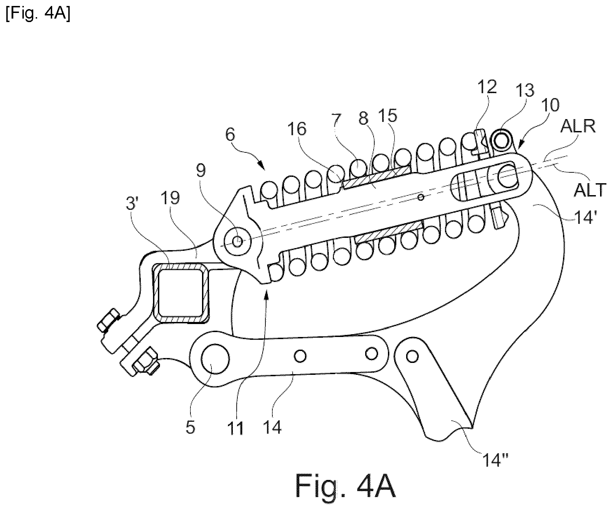

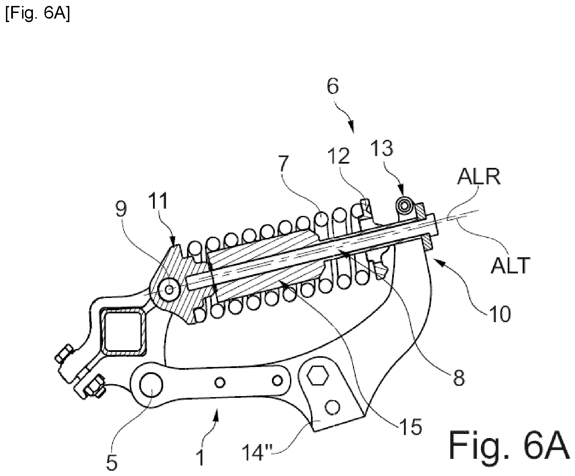

Conformément à l'invention, et comme le montrent plus précisément les figures 4A et 6A, l'ensemble d'outil (1) est caractérisé en ce que l'axe longitudinal (ALR) de l'élément élastiquement compressible (7) est parallèle et décalé radialement par rapport à l'axe longitudinal (ALT) de la tige (8).

Grâce à cette disposition de l'invention, il est possible de garantir, par une mesure préventive simple à mettre en œuvre, la direction du flambage de l'élément élastiquement compressible (7), et donc de connaitre à l'avance les frottements générés, ce systématiquement pour chaque action de compression. En tirant profit de cette mesure, l'invention peut viser dans un second temps, à améliorer de manière ciblée et limitée, par des mesures constructives adaptées, le dispositif de sécurité mécanique (6), en limitant l'usure, par la connaissance préalable de la localisation et de la nature des frottements générés par le flambage lors de la sollicitation du dispositif de sécurité mécanique (6).

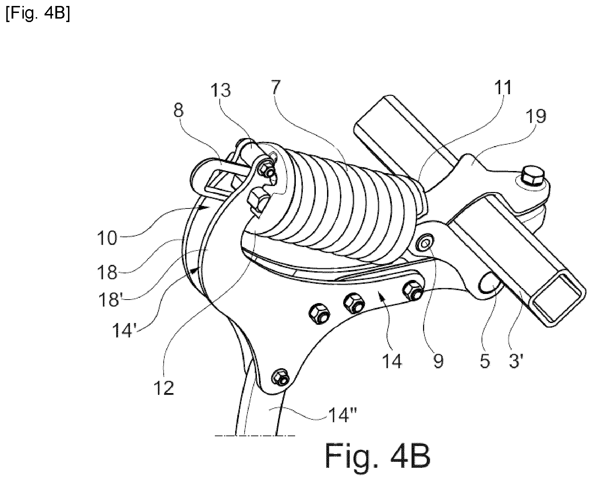

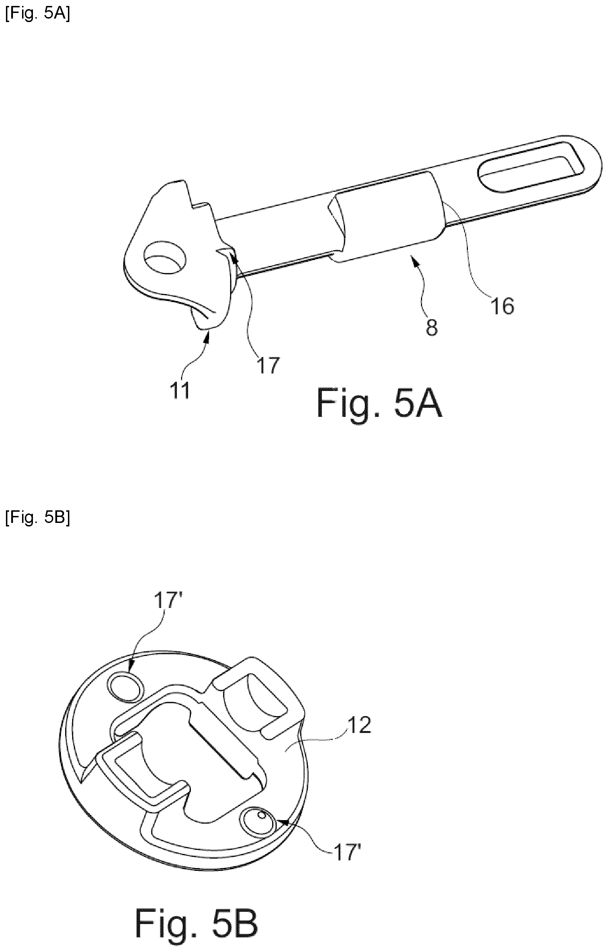

En accord avec un mode d'obtention simple et sûr du décalage entre les axes longitudinaux (ALT) et (ALR), et comme le montrent par exemple les figures 4 à 6, il peut être avantageusement prévu que les sièges avant et arrière (11, 12) sont tous deux asymétriques et/ou arrangés de manière désaxée par rapport à l'axe longitudinal (ALT) de la tige (8). Ainsi, le décalage des deux axes longitudinaux (ALT) et (ALR) entre eux est fixé constructivement dès la fabrication initiale des pièces.

En pratique, un faible décalage entre les axes longitudinaux, de l'ordre de quelques millimètres (par exemple environ 5 mm), est suffisant pour obtenir le résultat recherché.

Par ailleurs, le décalage entre les axes longitudinaux (ALT) et (ALR) est tel que l'axe longitudinal (ALR) se trouve situé au-dessus de l'axe longitudinal (ALT) pour aboutir à un flambage vers le haut de l'élément élastiquement compressible (7) (forme bombée convexe, vue de dessus), favorable à la génération d'un couple résistant opposé à un escamotage de l'outil (4) plus important.

Préférentiellement, la liaison articulée avant (9) de la tige (8) avec le châssis (3) est une liaison pivot, dont l'axe est parallèle à l'axe de la liaison principale à pivot (5) La liaison articulée arrière (10) avec l'outil (4) est une liaison à pivot glissant, dont les deux positions extrêmes en coulissement correspondent respectivement à la position déployée de travail et à la position d'escamotage extrême de l'outil (4).

Bien entendu, de nombreuses variantes constructives pratiques du dispositif de sécurité mécanique (6) sont possibles.

Selon une variante préférée toutefois, le siège avant (11) est formé d'un seul tenant avec la tige (8) et le siège arrière (12) est une pièce séparée, montée coulissante sur la tige (8) et en appui sous pression élastique, sous l'effet de l'élément élastiquement compressible (7), contre l'outil (4) au niveau de la liaison articulée arrière (10).

Comme le montrent les figures 4, la liaison articulée arrière (10) peut être configurée pour autoriser un coulissement relatif de la tige (8) par rapport à l'outil (4) selon l'axe longitudinal (ALT) de la tige (8), lors de son pivotement autour de la liaison principale à pivot (5). De plus, au moins une butée d'assistance (13) qui guide ce coulissement, le cas échéant en combinaison avec un positionnement relatif fourni par coopération du siège arrière (12) ou de la tige (8) avec l'outil (4), est prévue au niveau de l'outil (4). Cette butée d'assistance (13) est un galet, par exemple de forme cylindrique, qui reçoit en appui roulant la tige (8) et permet de transformer en frottements de roulement les frottements générés lors du déplacement de la tige (8) soumise aux efforts résultant du flambage de l'élément élastiquement compressible (7). D'une manière avantageuse, le galet (13) est en matière plastique.

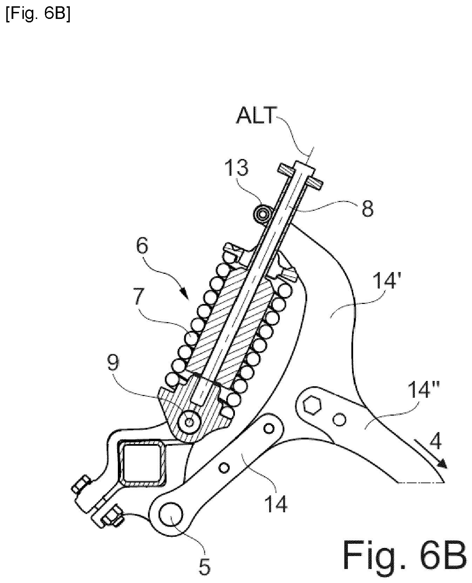

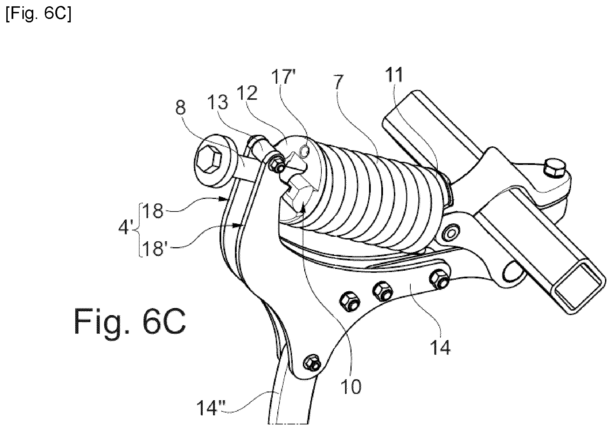

Lorsque l'axe longitudinal (ALR) de l'élément élastiquement compressible (7) est décalé vers le haut par rapport à l'axe longitudinal (ALT) de la tige (8), ce dans un plan qui est perpendiculaire à l'axe de la liaison principale à pivot (5) et qui contient ces deux axes, la butée d'assistance (13) est avantageusement au moins partiellement située au-dessus de la liaison articulée arrière (10). Par ailleurs, une partie au moins de la tige (8) s'étend entre cette butée d'assistance (13) et la liaison articulée arrière (10). Cela est notamment le cas dans les variantes de réalisation représentées sur les figures 4 et 6. D'une manière avantageuse, la butée d'assistance (13) s'étend entre les deux flancs (18, 18').

Afin de limiter les frottements entre la tige (8) et l'élément élastiquement compressible (7), et aussi pour limiter la déformation de ce dernier lors de sa compression, la tige (8) peut comporter, sur une partie de sa longueur, un fourreau (15) de guidage de l'élément élastiquement compressible (7), assurant le cas échéant également le guidage en coulissement du siège arrière (12) suivant l'axe longitudinal (ALT) de la tige (8). La tige (8) ou le fourreau (15) comporte avantageusement une butée d'arrêt (16) limitant le déplacement du siège arrière (12) vers la liaison articulée avant (9). La butée d'arrêt (16) définit la position d'escamotage extrême de l'outil (4). Ce fourreau (15) de guidage, préférentiellement en matière plastique, peut-être une pièce rapportée, du type cylindre creux ou coquille partiellement cylindrique, enfilé(e) sur la tige (8) et déplaçable selon la direction axiale de cette dernière, ou alors être formée d'un seul tenant avec la tige (8).

Selon une caractéristique avantageuse de l'invention facilitant l'assemblage du dispositif de sécurité mécanique (6) et permettant de garantir le décalage recherché entre les axes, il peut être prévu que les sièges avant et arrière (11 et 12) soient tous deux pourvus de détrompeurs (17, 17'). Le détrompeur est un dispositif, par exemple une encoche, un ergot ou un relief servant à indiquer la position correcte des sièges avant et arrière lors du montage du dispositif de sécurité mécanique (6). Selon une alternative non représentée, le montage correct du dispositif de sécurité mécanique (6) est garanti par l'utilisation d'un moyen externe tel qu'un gabarit de montage.

En relation avec une variante constructive pratique avantageuse ressortant également des figures 2 à 4 et 6, l'outil (4) comprend un bras support (4') en forme de Y, dont les deux branches supérieures avant (14) et arrière (14') sont reliées respectivement, d'une part au châssis (3) par l'intermédiaire de la liaison principale à pivot (5) et, d'autre part à la tige (8) et au siège arrière (12) par la liaison articulée arrière (10). La branche inférieure (14") forme étançon et porte la partie fonctionnelle (4") de l'outil (4) qui sur les figures annexées est une dent, mais peut également consister en un autre type de partie fonctionnelle, telle qu'une roue, un disque, un rouleau, un outil de semis ou analogues. L'étançon peut être un bras ou un dispositif de liaison. En outre, au moins la branche supérieure arrière (14') présente éventuellement une structure à deux flancs (18, 18') espacés, entre lesquels la tige (8) est insérée et guidée. Dans une alternative non représentée, la branche supérieure arrière (14') est constituée d'un seul flanc et la tige (8), notamment son extrémité arrière, est réalisée en deux parties. Les deux parties de tige (8) sont alors montées de part et d'autre du flanc de la branche supérieure arrière (14').

La présente invention concerne également, comme le montre à titre d'exemple la figure 1, une machine agricole (2) pour le travail du sol ou le semis, laquelle comporte un châssis (3) et se déplace au travail selon une direction d'avance (A).

Selon l'invention, cette machine (2) est caractérisée en ce qu'elle comprend au moins un, préférentiellement plusieurs, ensemble(s) d'outil(s) (1) tel(s) que décrit(s) ci-dessus, par exemple monté(s) sur une ou plusieurs traverses (3') faisant partie du châssis (3), le cas échéant de manière interchangeable et/ou réglable en position sur la traverse concernée.

Sur les figures 2 à 4 et 6, l'ensemble d'outil (1) comprend un élément de bridage (19) pour sa fixation sur la traverse (3') du châssis (3), avec un boîtier et une bride assujettis rigidement sur la traverse par serrage au moyen de vis. Avec ce type de montage des outils, leurs écartements respectifs sur la traverse (3') sont réglables.

Bien entendu, l'élément de bridage peut également être soudé sur la traverse. Les différents outils (4) sont alors fixés, sans possibilité de réglage, sur les traverses.

En fonction de la nature des ensembles d'outils (1) qu'elle porte, la machine (2) peut réaliser des travaux de déchaumage, de décompactage, de sous-solage, de scarification, de tassement, ou des travaux de préparation des sols analogues, voire des travaux de semis, ou encore plusieurs types de travaux si au moins deux types d'outils différents sont présents.

Bien entendu, l'invention n'est pas limitée aux modes de réalisation décrits et représentés sur les dessins annexés. Des modifications restent possibles, notamment du point de vue de la constitution des divers éléments ou par substitution d'équivalents techniques, sans sortir pour autant du domaine de protection de l'invention.

## Revendications

1. Ensemble d'outil (1) pour machine agricole (2) de travail du sol ou de semis comportant un châssis (3) et se déplaçant au travail selon une direction d'avance (A), l'ensemble (1) comprenant un outil (4) relié au châssis (3) par l'intermédiaire d'une liaison principale à pivot (5) et par un dispositif de sécurité mécanique (6), ce dernier présentant un élément allongé (7) qui est élastiquement compressible selon son axe longitudinal (ALR), monté avec guidage sur ou autour d'une tige (8) et positionné entre une liaison articulée avant (9) de cette tige (8) avec le châssis (3) et une liaison articulée arrière (10) de cette tige (8) avec l'outil (4), cet outil (4) pouvant être déplacé par pivotement autour de la liaison principale à pivot (5) entre une position déployée maximale de travail dans laquelle l'élément élastiquement compressible (7) est au plus faiblement comprimé et une position d'escamotage extrême dans laquelle l'élément élastiquement compressible (7) est fortement comprimé, et l'élément élastiquement compressible (7) étant maintenu constamment en appui sous pression entre un siège avant (11) associé à la liaison articulée avant (9) de la tige (8) et un siège arrière (12) associé à sa liaison articulée arrière (10),
ensemble d'outil (1) **caractérisé en ce que** l'axe longitudinal (ALR) de l'élément élastiquement compressible (7) est parallèle et décalé radialement par rapport à l'axe longitudinal (ALT) de la tige (8).

2. Ensemble d'outil selon la revendication 1, **caractérisé en ce que** les sièges avant et arrière (11, 12) sont tous deux asymétriques et/ou arrangés de manière désaxée par rapport à l'axe (ALT) de la tige (8).

3. Ensemble d'outil selon la revendication 1 ou 2, **caractérisé en ce que** la liaison articulée avant (9) de la tige (8) avec le châssis (3) est une liaison pivot, dont l'axe est parallèle à l'axe de la liaison principale à pivot (5), et **en ce que** la liaison articulée arrière (10) avec l'outil (4) est une liaison à pivot glissant, dont les deux positions extrêmes en coulissement correspondent respectivement à la position déployée de travail et à la position d'escamotage extrême de l'outil (4).

4. Ensemble d'outil selon l'une quelconque des revendications 1 à 3, **caractérisé en ce que** le siège avant (11) est formé d'un seul tenant avec la tige (8) et **en ce que** le siège arrière (12) est une pièce séparée, montée coulissante sur la tige (8) et en appui sous pression élastique, sous l'effet de l'élément élastiquement compressible (7), contre l'outil (4) au niveau de la liaison articulée arrière (10).

5. Ensemble d'outil selon l'une quelconque des revendications 1 à 4, **caractérisé en ce que** la liaison articulée arrière (10) est configurée pour autoriser un coulissement relatif de la tige (8) par rapport à l'outil (4) selon l'axe (ALT) de la tige (8), lors de son pivotement autour de la liaison principale à pivot (5), et qu'au moins une butée d'assistance (13) guidant ce coulissement, le cas échéant en combinaison avec un positionnement relatif fourni par coopération du siège arrière (12) ou de la tige (8) avec l'outil (4), est prévue au niveau de l'outil (4).

6. Ensemble d'outil selon la revendication 5, **caractérisé en ce que** l'axe longitudinal (ALR) de l'élément élastiquement compressible (7) est décalé vers le haut par rapport à l'axe longitudinal (ALT) de la tige (8), ce dans un plan perpendiculaire à l'axe de la liaison principale à pivot (5) qui les contient tous les deux, la butée d'assistance (13) étant avantageusement au moins partiellement située au-dessus de la liaison arrière (10) et une partie au moins de la tige (8) s'étendant entre cette butée d'assistance (13) et la liaison arrière (10).

7. Ensemble d'outil selon l'une quelconque des revendications 1 à 6, **caractérisé en ce que** la tige (8) comporte, sur une partie de sa longueur, un fourreau (15) de guidage de l'élément élastiquement compressible (7) assurant le cas échéant également le guidage en coulissement du siège arrière (12) suivant l'axe (ALT) de la tige (8), la tige (8) ou le fourreau (15) comportant avantageusement une butée d'arrêt (16) limitant le déplacement du siège arrière (12) vers la liaison articulée avant (9) et définissant la position d'escamotage extrême de l'outil (4).

8. Ensemble d'outil selon l'une quelconque des revendications 1 à 7, **caractérisé en ce que** les sièges avant et arrière (11 et 12) sont tous deux pourvus de détrompeurs (17, 17').

9. Ensemble d'outil selon l'une quelconque des revendications 1 à 8, **caractérisé en ce que** l'outil (4) comprend un bras support (4') en forme de Y, dont les deux branches supérieures avant (14) et arrière (14') sont reliées respectivement, d'une part, au châssis (3) par l'intermédiaire de la liaison principale à pivot (5) et, d'autre part, à la tige (8) et au siège arrière (12) par la liaison articulée arrière (10), et dont la branche inférieure (14") forme étançon et porte la partie fonctionnelle (4") de l'outil (4), au moins la branche supérieure arrière (14') présentant éventuellement une structure à deux flancs (18, 18') espacés, entre lesquels est reçue et guidée la tige (8).

10. Machine agricole (2) pour le travail du sol ou le semis comportant un châssis (3) et se déplaçant au travail selon une direction d'avance (A), **caractérisée en ce qu'**elle comprend au moins un, préférentiellement plusieurs, ensemble(s) d'outil(s) (1) selon l'une des revendications 1 à 9, par exemple montés sur une ou plusieurs traverses (3') faisant partie du châssis (3), le cas échéant de manière interchangeable et/ou réglable en position sur la traverse concernée.

## Patentansprüche

1. Werkzeugeinheit (1) für eine landwirtschaftliche Bodenbearbeitungs- oder Sämaschine (2) mit einem Rahmen (3), die sich bei der Arbeit in einer Vorwärtsrichtung (A) bewegt, wobei die Einheit (1) ein Werkzeug (4) umfasst, das über eine Hauptschwenkverbindung (5) und eine mechanische Sicherheitsvorrichtung (6) mit dem Rahmen (3) verbunden ist, wobei diese letztere ein längliches Element (7) aufweist, das entlang seiner Längsachse (ALR) elastisch komprimierbar ist, das auf oder um eine Stange (8) geführt montiert ist und zwischen einer vorderen (9) Gelenkverbindung dieser Stange (8) mit dem Rahmen (3) und einer hinteren (10) Gelenkverbindung dieser Stange (8) mit dem Werkzeug (4) positioniert ist, wobei dieses Werkzeug (4) um die Hauptschwenkverbindung (5) zwischen einer maximalen ausgefahrenen Arbeitsposition, in der das elastisch komprimierbare Element (7) am wenigsten komprimiert ist, und einer extremen eingefahrenen Position, in der das elastisch komprimierbare Element (7) stark komprimiert ist, schwenkbar ist, und wobei das elastisch komprimierbare Element (7) ständig unter Druck zwischen einem vorderen Sitz (11), der mit der vorderen (9) Gelenkverbindung der Stange (8) verbunden ist, und einem hinteren Sitz (12), der mit ihrer hinteren (10) Gelenkverbindung verbunden ist, gehalten wird,
Werkzeugeinheit (1), **dadurch gekennzeichnet, dass** die Längsachse (ALR) des elastisch komprimierbaren Elements (7) parallel und radial versetzt zur Längsachse (ALT) der Stange (8) verläuft.

2. Werkzeugeinheit nach Anspruch 1, **dadurch gekennzeichnet, dass** die vorderen und hinteren Sitze (11, 12) beide asymmetrisch und/oder versetzt zur Achse (ALT) der Stange (8) angeordnet sind.

3. Werkzeugeinheit nach Anspruch 1 oder 2, **dadurch gekennzeichnet, dass** die vordere (9) Gelenkverbindung der Stange (8) mit dem Rahmen (3) eine Schwenkverbindung ist, deren Achse parallel zur Achse der Hauptschwenkverbindung (5) verläuft, und dass die hintere (10) Gelenkverbindung mit dem Werkzeug (4) eine Gleitgelenkverbindung ist, deren beide Endpositionen jeweils der ausgefahrenen Arbeitsposition und der extremen Einfahrposition des Werkzeugs (4) entsprechen.

4. Werkzeugeinheit nach einem der Ansprüche 1 bis 3, **dadurch gekennzeichnet, dass** der vordere Sitz (11) einstückig mit der Stange (8) ausgebildet ist und dass der hintere Sitz (12) ein separates Teil ist, das verschiebbar auf der Stange (8) montiert ist und unter elastischem Druck unter der Wirkung des elastisch komprimierbaren Elements (7) gegen das Werkzeug (4) in Höhe der hinteren (10) Gelenkverbindung.

5. Werkzeugeinheit nach einem der Ansprüche 1 bis 4, **dadurch gekennzeichnet, dass** die hintere (10) Gelenkverbindung so konfiguriert ist, dass sie ein relatives Gleiten der Stange (8) gegenüber dem Werkzeug (4) entlang der Achse (ALT) der Stange (8) zulässt, wenn sie um die Hauptschwenkverbindung (5) schwenkt, und dass mindestens ein Hilfsanschlag (13), der diese Verschiebung führt, gegebenenfalls in Kombination mit einer relativen Positionierung, die durch das Zusammenwirken des hinteren Sitzes (12) oder der Stange (8) mit dem Werkzeug (4) bereitgestellt wird, am Werkzeug (4) vorgesehen ist.

6. Werkzeugeinheit nach Anspruch 5, **dadurch gekennzeichnet, dass** die Längsachse (ALR) des elastisch komprimierbaren Elements (7) gegenüber der Längsachse (ALT) der Stange (8) nach oben versetzt ist und zwar in einer Ebene senkrecht zur Achse der sie beide enthaltenden Hauptschwenkverbindung (5), wobei sich der Hilfsanschlag (13) vorteilhafterweise zumindest teilweise über der hinteren (10) Verbindung befindet und sich zumindest ein Teil der Stange (8) zwischen diesem Hilfsanschlag (13) und der hinteren (10) Verbindung erstreckt.

7. Werkzeugeinheit gemäß einem der Ansprüche 1 bis 6, **dadurch gekennzeichnet, dass** die Stange (8) über einen Teil seiner Länge eine Hülse (15) zur Führung des elastisch komprimierbaren Elements (7) aufweist, die gegebenenfalls auch die Gleitführung des hinteren Sitzes (12) entlang der Achse (ALT) der Stange (8) gewährleistet, wobei die Stange (8) oder die Hülse (15) vorteilhafterweise einen Anschlag (16) aufweist, der die Bewegung des hinteren Sitzes (12) in Richtung der vorderen (9) Gelenkverbindung begrenzt und die extreme Einfahrposition des Werkzeugs (4) definiert.

8. Werkzeugsatz gemäß einem der Ansprüche 1 bis 7, **dadurch gekennzeichnet, dass** sowohl die vorderen als auch die hinteren Sitze (11 und 12) mit Verwechslungsschutz (17, 17') versehen sind.

9. Werkzeugeinheit nach einem der Ansprüche 1 bis 8, **dadurch gekennzeichnet, dass** das Werkzeug (4) einen Y-förmigen Stützarm (4') umfasst, dessen beiden oberen vorderen (14) und hinteren (14') Schenkel einerseits über die Hauptschwenkverbindung (5) mit dem Rahmen (3) und andererseits über die hintere (10) Gelenkverbindung mit der Stange (8) und dem hinteren Sitz (12) verbunden sind, und dessen unteren Schenkel (14") eine Stütze bildet und den funktionellen Teil (4") des Werkzeugs (4) trägt, wobei zumindest der hintere obere Schenkel (14') gegebenenfalls eine Struktur mit zwei beabstandeten Flanken (18, 18') aufweist, zwischen denen die Stange (8) aufgenommen und geführt wird.

10. Landwirtschaftliche Bodenbearbeitungs- oder Sämaschine (2) mit einem Rahmen (3), die sich bei der Arbeit in einer Vorwärtsrichtung (A) bewegt, **dadurch gekennzeichnet, dass** sie mindestens eine, vorzugsweise mehrere Werkzeugeinheiten (1) nach einem der Ansprüche 1 bis 9 umfasst, die beispielsweise an einer oder mehreren zum Rahmen (3) gehörenden Querträgern (3') angebracht sind, gegebenenfalls austauschbar und/oder in ihrer Position an dem betreffenden Querträger einstellbar.

## Claims

1. Tool assembly (1) for an agricultural soil-working or seeding machine (2) comprising a chassis (3) and moving during work in a forward direction (A), the assembly (1) comprising a tool (4) connected to the chassis (3) by means of a main pivot connection (5) and a mechanical safety device (6), the latter having an elongated element (7) which is elastically compressible along its longitudinal axis (ALR), mounted with guidance on or around a rod (8) and positioned between a front articulated connection (9) of this rod (8) with the chassis (3) and a rear articulated connection (10) of this rod (8) with the tool (4), this tool (4) being able to be moved by pivoting around the main pivot connection (5) between a maximum deployed working position in which the elastically compressible element (7) is minimally compressed and an extreme retracted position in which the elastically compressible element (7) is highly compressed, and the elastically compressible element (7) being constantly held under pressure between a front seat (11) associated with the front articulated connection (9) of the rod (8) and a rear seat (12) associated with its rear articulated connection (10),
tool assembly (1) **characterised in that** the longitudinal axis (ALR) of the elastically compressible element (7) is parallel to and radially offset from the longitudinal axis (ALT) of the rod (8).

2. Tool assembly according to claim 1, **characterised in that** the front and rear seats (11, 12) are both asymmetrical and/or arranged off-centre with respect to the longitudinal axis (ALT) of the rod (8).

3. Tool assembly according to claim 1 or 2, **characterised in that** the front articulated connection (9) of the rod (8) with the chassis (3) is a pivot connection, the axis of which is parallel to the axis of the main pivot connection (5), and **in that** the rear articulated connection (10) with the tool (4) is a sliding pivot connection, whose two extreme sliding positions correspond respectively to the deployed working position and the extreme retracted position of the tool (4).

4. Tool assembly according to any one of claims 1 to 3, **characterised in that** the front seat (11) is formed integrally with the rod (8) and the rear seat (12) is a separate part, mounted so as to slide on the rod (8) and supported under elastic pressure, under the effect of the elastically compressible element (7), against the tool (4) at the rear articulated connection (10).

5. Tool assembly according to any one of claims 1 to 4, **characterised in that** the rear articulated connection (10) is configured to allow relative sliding of the rod (8) with respect to the tool (4) along the longitudinal axis (ALT) of the rod (8) when pivoting around the main pivot connection (5), and **in that** at least one support stop (13) which guides this sliding movement, if necessary in combination with relative positioning provided by cooperation between the rear seat (12) or the rod (8) with the tool (4), is provided at the tool (4).

6. Tool assembly according to claim 5, **characterised in that** the longitudinal axis (ALR) of the elastically compressible element (7) is offset upwards relative to the longitudinal axis (ALT) of the rod (8), in a plane that is perpendicular to the axis of the main pivot connection (5) and contains these two axes, the support stop (13) being advantageously located at least partially above the rear articulated connection (10) and at least part of the rod (8) extending between this support stop (13) and the rear connection (10).

7. Tool assembly according to any one of claims 1 to 6, **characterised in that** the rod (8) comprises, over part of its length, a guide sleeve (15) for the elastically compressible element (7), which also guides, if necessary, the rear seat (12) as it slides along the longitudinal axis (ALT) of the rod (8), the rod (8) or sleeve (15) advantageously comprising a stop (16) limiting the movement of the rear seat (12) towards the front articulated connection (9) and defining the extreme retracted position of the tool (4).

8. Tool assembly according to any one of claims 1 to 7, **characterised in that** the front and rear seats (11 and 12) are both equipped with keyways (17, 17').

9. Tool assembly according to any one of claims 1 to 8, **characterised in that** the tool (4) comprises a Y-shaped support arm (4'), whose two upper front (14) and rear (14') branches are connected respectively, on the one hand, to the chassis (3) via the main pivot connection (5) and, on the other hand, to the rod (8) and the rear seat (12) via the rear articulated connection (10), and whose lower branch (14") forms a stanchion and carries the functional part (4") of the tool (4), at least the upper rear branch (14') having a structure with two spaced-apart flanks (18, 18'), between which the rod (8) is inserted and guided.

10. Agricultural machine (2) for soil-working or seeding comprising a chassis (3) and moving during work in a forward direction (A), **characterised in that** it comprises at least one, preferably several, tool assemblies (1) according to one of claims 1 to 9, for example mounted on one or more crossbars (3') forming part of the chassis (3), where applicable in an interchangeable and/or adjustable manner on the crossbar concerned.
